# EUROPEAN PATENT SPECIFICATION

(11) **EP 4 228 078 B1**
(45) Date of publication and mention of the grant of the patent: **15.01.2025**
(21) Application number: 23156002.0
(22) Date of filing: 10.02.2023
(51) Int. Cl.: H01M 50/507, H01M 50/519

(54) **BATTERY CONNECTION MODULE**
BATTERIEANSCHLUSSMODUL
MODULE DE CONNEXION DE BATTERIE

(30) Priority: 11.02.2022 CN 202210129502
(43) Date of publication of application: 16.08.2023
(73) Proprietor: Molex, LLC, Lisle, IL 60532 (US)
(72) Inventor: LIN, Yong, ChengDu (CN); LIM, Kian Heng, Jurong Town (SG); ZENG, Shang Xiu, ChengDu (CN)
(74) Representative: Ter Meer Steinmeister & Partner

(56) References cited:
- DE-A1- 102019 134 469
- US-A1- 2020 313 139
- US-A1- 2022 320 602

## Description

### Technical Field

The present disclosure relates to the field of battery technology, and specifically relates to a battery connection module.

### Background

Chinese utility model patent application issuance publication No. CN203691758U discloses a flexible printed circuit board, which includes two or more fusible assemblies connected in series, each fusible assembly is provided with a connector and a fusible wire which are connected in parallel therein. In use, the connector of one fusible assembly is provided as an operating connector, two pads of the operating connector are in open circuit therebetween, but the connector of another fusible assembly acts as a backup connector, two pads of the backup connector are short-circuited by a solder so that a fusible wire connected with the backup connector in parallel is short-circuited, which is equivalent to that the backup connector directly acts as a conductive wire. On one hand, the fusible module of the flexible printed circuit board may make the fusible wire connected with the operating connector in parallel melted and interrupted when a circuit is in overcurrent so as to function overcurrent protection, on the other hand, the fusible module of the flexible printed circuit board is convenient to repair, when the fusible wire connected with the operating connector in parallel is melted and interrupted, it only needs to remove the solder previously welded on the backup connector and then the first pad and the second pad of the operating connector are welded with a solder so as to make the first pad and the second pad short-circuited, so that the circuit is conducted, the fusible wire connected with the backup connector in parallel may operate.

Chinese utility model patent application issuance publication No. CN209787546U (corresponding to United States patent application publication No. US2020/0203777A1) discloses a circuit board and a battery module, and specifically discloses a first branch path and a second branch path, the first branch path is formed with a first fusing zone, the second branch path is formed with a second fusing zone. One end of the second branch path is connected to a sampling end portion or a portion of the first branch path except the first fusing zone, the other end of the second branch path is spaced apart from the sampling end portion and the first branch path. In the sampling process of the circuit board, a first pad transmits a collected signal to an external controller via the sampling end portion, the first branch path and an outputting end portion of the sampling circuit. When the first fusing zone of the first branch path is melted and interrupted (at this time the sampling end portion and the outputting end portion of the sampling circuit are disconnected), because the sampling circuit is further provided with the second branch path, the circuit board can be quickly repaired by means of the second branch path and the second pad to make electrical connection between the sampling end portion and the outputting end portion conducted during the return repair of the circuit board, thereby achieving the purpose of reusing the circuit board.

US 2020/313139 A1 discloses a bus bar module of a battery system. The bus bar module includes a bus bar, a sensing circuit carrier, and a fuse assembly. The bus bar is held by a tray and configured to electrically connect two battery cells of the battery system. The sensing circuit carrier includes at least a first electrical conductor and a dielectric insulator surrounding the first electrical conductor. The fuse assembly includes a first holder terminal, a second holder terminal, and a fuse disposed between and electrically connected to the first and second holder terminals. The first holder terminal is electrically connected to the first electrical conductor of the sensing circuit carrier, and the second holder terminal is electrically connected to the bus bar such that the fuse assembly defines a segment of a voltage sensing line from the bus bar through the sensing circuit carrier towards a control device.

The above prior arts both disclose a technical solution that connectors or other electronic components are provided on the same circuit board and then the circuit board mounted with the electronic components are performed on welding operation with busbars. However, if welding problem between the circuit board and the busbar occurs during the manufacturing operation of the circuit board, it is possible to result in the entire circuit board with high value to be scrapped. And in use, when the circuit in overcurrent would result in the circuit containing the fusible wire to be melted and interrupted, although the circuit containing the fusible wire disclosed in the above prior arts may be required, the circuit containing the fusible wire may be repaired only once, and when the circuit containing the fusible wire cannot be repair, it is possible to result in the entire circuit board with high value to be scrapped, even the entire battery pack to be scrapped. Summary

Therefore, an object of the present disclosure is to provide a battery connection module which can improve at least one deficiency of the prior arts.

The object is solved by the features of the independent claims. Preferred embodiments are given in the dependent claims.

A battery connection module of an embodiment of the present disclosure is used to connect a plurality of batteries, the battery connection module comprises a carrying tray, a plurality of busbars, a main circuit board and a bridging circuit board, the plurality of busbars are assembled on the carrying tray, the plurality of busbars are used to connect the plurality of batteries; the main circuit board comprises a plurality of first wirings and a plurality of second wirings, connect points of one ends of the plurality of first wirings are converged to a first connect point connection region, the other ends of at least some of the plurality of first wirings connect the plurality of busbars, one ends of the plurality of second wirings connect operating components mounted on the main circuit board and connect points of other ends of the plurality of second wirings are converged in a second connect point connection region; the bridging circuit board comprises a plurality of bridging wirings which are used to respectively bridge the plurality of first wirings of the first connect point connection region and the plurality of second wirings of the second connect point connection region, each bridging wiring comprises a fuse segment thereon. The battery connection module further comprises connectors. Two ends of each bridging wiring are connected respectively with the first wiring and the second wiring of the main circuit board via terminals of the connectors.

According to one or more embodiments of the present disclosure, the fuse segment may be constructed as a fusible wiring which is provided on the bridging wiring.

According to one or more embodiments of the present disclosure, the bridging circuit board may be constructed as a flexible circuit board and/or the main circuit board may be constructed as a rigid circuit board.

According to one or more embodiments of the present disclosure, a connecting manner of two ends of the terminal of the connector with the main circuit board and the bridging circuit board therebetween may be through-hole type welding.

According to one or more embodiments of the present disclosure, the other ends of another some first wirings of the main circuit board may be further used to connect sensors.

According to one or more embodiments of the present disclosure, the main circuit board and each busbar may be connected via a conductive piece therebetween.

According to one or more embodiments of the present disclosure, the conductive piece may comprise a circuit board connecting segment, a busbar connecting segment and a buffering segment.

According to one or more embodiments, the buffering segment may be positioned between the circuit board connecting segment and the busbar connecting segment.

One embodiment of the above disclosure at least has following advantage or beneficial effect: in the battery connection module of the embodiment, the bridging circuit board acts as a bridge which connects the plurality of first wirings and the plurality of second wirings of the main circuit board therebetween, the plurality of first wirings and the plurality of second wirings can be separately provided, and have different functions and actions, for example, the plurality of first wirings may be used to connect the plurality of busbars and the temperature sensors, the plurality of second wirings may be used to connect the operating components (includes the electronic components, the electrical connector and the like). At the same time, the fuse segments are provided on the bridging circuit board so when a circuit is overcurrent, after a fuse wiring on the bridging circuit board is melted and interrupted, it only needs to simply replace the bridging circuit board, but it does not need to draw out and replace the main circuit board, which has advantages that repair is simple and cost is low.

### Brief Description Of The Drawings

FIG. 1 illustrates a perspective view of a battery connection module of an embodiment of the present disclosure assembled with a plurality of batteries.
FIG. 2 illustrates an exploded schematic view of the battery connection module of the embodiment of the present disclosure and the plurality of batteries.
FIG. 3 illustrates a perspective view of the battery connection module of the embodiment of the present disclosure.
FIG. 4 illustrates a partially enlarged view indicated by a dotted line frame A of FIG. 3.
FIG. 5 illustrates an exploded schematic view of the battery connection module of the embodiment of the present disclosure.
FIG. 6 illustrates another exploded schematic view of the battery connection module of the embodiment of the present disclosure, with a carrying tray and a plurality of busbars omitted.
FIG. 7 illustrates a top view of a bridging circuit board of the embodiment of the present disclosure.
FIG. 8 illustrates a top view of a first connect point connection region and a second connect point connection region of a main circuit board of the embodiment of the present disclosure.
FIG. 9 illustrates a partially enlarged view indicated by a dotted line frame B of FIG. 5.
Reference numerals are presented as follows.

| | | | |
|---|---|---|---|
| 100 | battery connection module | 34 | second connect point connection region |
| 200 | battery | 4 | connector |
| 210 | electrode | 41 | conductive terminal |
| 1 | carrying tray | 5 | bridging circuit board |
| 11 | circuit board mounting region | 51 | bridging wiring |
| 111 | middle segment | 511 | third conductive hole |
| 112 | extending segment | 512 | fourth conductive hole |
| 13 | receiving groove | 52 | fuse segment |
| 13a | sub-recessed groove | 53 | third connect point connection region |
| 131 | side wall | 54 | fourth connect point connection region |
| 132 | partitioning wall | 6 | conductive piece |
| 133 | supporting portion | 61 | circuit board connecting segment |
| 134 | bearing portion | 611 | first notch |
| 135 | pressing member | 62 | buffering segment |
| 136 | inner wall | 621 | buffering bar |
| 2 | busbar | 63 | busbar connecting segment |
| 21 | outputting busbar | 7 | operating component |
| 221 | bulging portion | 71 | electrical connector |
| 222 | electrode connecting portion | 72 | electronic components |
| 3 | main circuit board | 8 | sensor |
| 31 | first wiring | 81 | temperature sensor |
| 311 | first conductive hole | | |
| 32 | second wiring | | |
| 321 | conductive pad | | |
| 3211 | second notch | | |
| 322 | second conductive hole | | |
| 33 | first connect point connection region | | |

### Detailed Description

Now exemplary embodiments will be described more fully with reference to the accompanying drawings. However, the exemplary embodiments can be implemented in a variety of forms, and should not be construed as limited to the embodiments described herein; on the contrary, providing these embodiments makes the present disclosure comprehensive and complete, and makes the concept of exemplary embodiments fully conveyed to those skilled in the art. The same reference numerals in the figures represent the same or similar structures, and therefore repeated description thereof will be omitted.

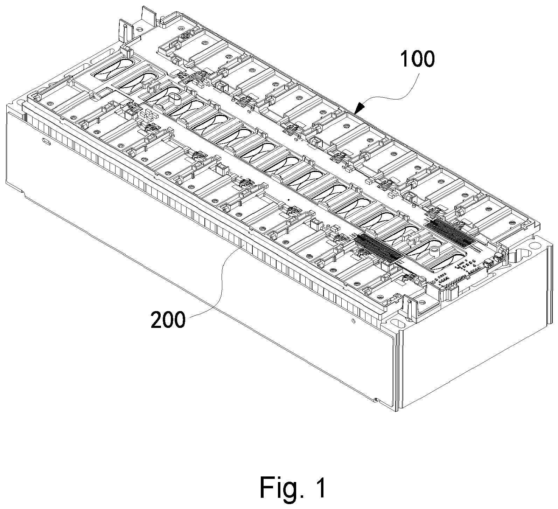

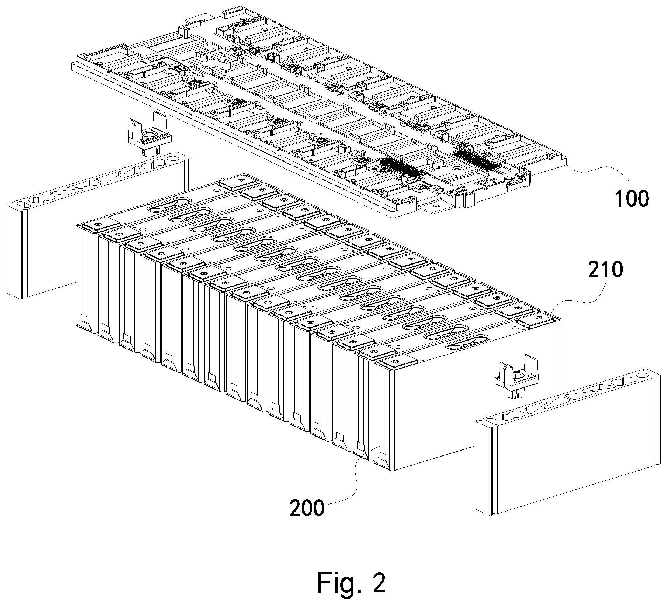

As shown in FIG. 1 and FIG. 2, FIG. 1 illustrates a perspective view of a battery connection module of an embodiment of the present disclosure assembled with a plurality of batteries, and FIG. 2 illustrates an exploded schematic view of the battery connection module of the embodiment of the present disclosure and the plurality of batteries. A battery connection module 100 of an embodiment of the present disclosure is used to connect a plurality of batteries 200, and is used to detect voltages, temperatures or other battery parameters of the plurality of batteries 200.

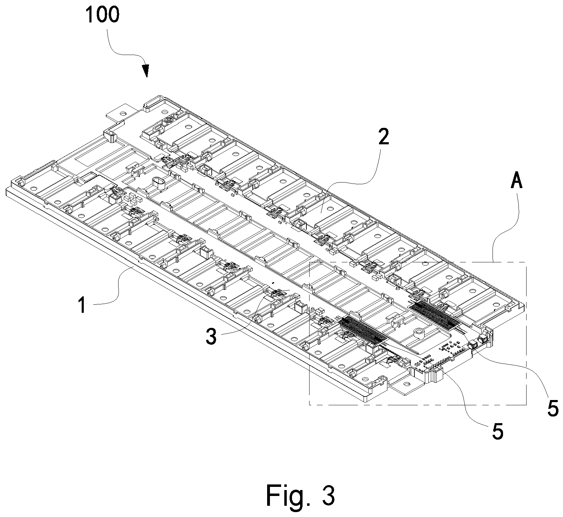

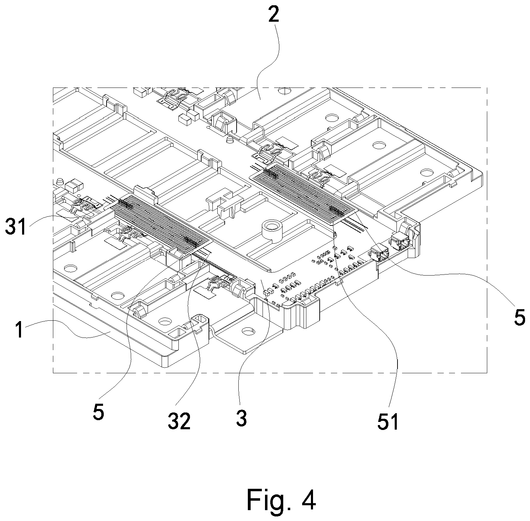

As shown in FIG. 3 and FIG. 4, FIG. 3 illustrates a perspective view of the battery connection module 100 of the embodiment of the present disclosure, and FIG. 4 illustrates a partially enlarged view indicated by a dotted line frame A of FIG. 3. The battery connection module 100 of the embodiment of the present disclosure includes a carrying tray 1, a plurality of busbars 2, a main circuit board 3 and a bridging circuit board 5. The plurality of busbars 2 are assembled on the carrying tray 1, the plurality of busbars 2 are used to connect the plurality of batteries 200. The main circuit board 3 is provided on the carrying tray 1, and the main circuit board 3 includes a plurality of first wirings 31 and a plurality of second wirings 32. The bridging circuit board 5 includes a plurality of bridging wirings 51, the plurality of bridging wirings 51 are used to respectively bridge the plurality of first wirings 31 and the plurality of second wirings 32 of the main circuit board 3.

It may be understood that, the terms "includes (include/including)" and "has (have/having)" in the embodiments of the present disclosure and any variant thereof are intended to cover non-exclusive inclusion. For example, a process, method, system, product or device that includes a series of steps or units is not limited to the listed steps or units, but optionally also includes a step or unit that is not listed, or optionally also includes other step or component that is inherent to the process, method, product or device.

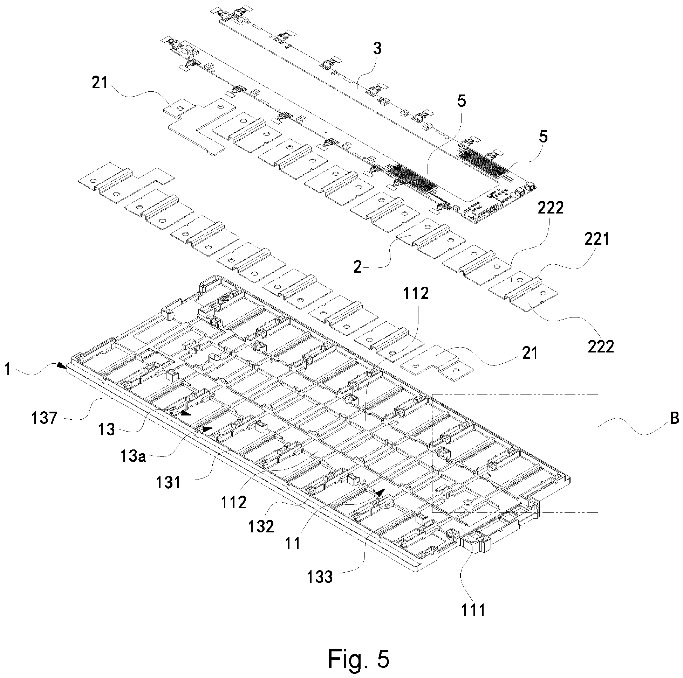

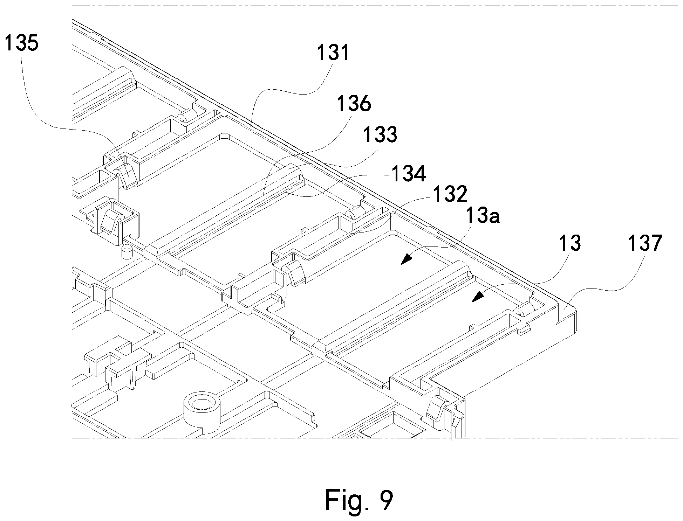

As shown in FIG. 5 and FIG. 9, FIG. 5 illustrates an exploded schematic view of the battery connection module 100 of the embodiment of the present disclosure, and FIG. 9 illustrates a partially enlarged view indicated by a dotted line frame B of FIG. 5. The carrying tray 1 for example may be integrally formed by an insulating material, and includes a circuit board mounting region 11 and a plurality of receiving grooves 13. The circuit board mounting region 11 is used to mount the main circuit board 3, the plurality of receiving groove 13 are used to mount the plurality of busbars 2.

The circuit board mounting region 11 is substantially U-shaped, and includes two extending segments 112 and a middle segment 111, the middle segment 111 is positioned at one end of the carrying tray 1 in a length direction of the carrying tray 1, the two extending segments 112 connect two ends of the middle segment 111 respectively and extend along the length direction of the carrying tray 1. Correspondingly, the main circuit board 3 also is substantially U-shaped, and can be correspondingly mounted in the circuit board mounting region 11.

It may be understood that, the shape of the circuit board mounting region 11 and the shape of the main circuit board 3 are not limited to U-shaped.

The plurality of receiving grooves 13 may be divided into two groups, the two groups of receiving grooves 13 are provided to face each other along a width direction of the carrying tray 1, and the receiving grooves 13 of each group are provided to be spaced apart from each other and arranged side by side along the length direction of the carrying tray 1. In other words, the receiving grooves 13 of each group are provided to be spaced apart from each other and arranged side by side along an extending direction of the corresponding extending segment 112 of the circuit board mounting region 11. The two groups of receiving grooves 13 are respectively provided corresponding to the two extending segments 112 of the circuit board mounting region 11, and the two groups of receiving grooves 13 are respectively provided at outer sides of the two extending segments 112 of the carrying tray 1.

The plurality of busbars 2 may be divided into two groups, and the two groups of busbars 2 are respectively mounted in the two groups of receiving grooves 13. The busbars 2 of each group are provided to be arranged side by side along the length direction of the carrying tray 1, and the busbar 2 positioned at one end of each group of busbars 2 is an outputting busbar 21, the two outputting busbars 21 may respectively represent a positive electrode and a negative electrode of a battery pack, and may be used to connect with a positive electrode and a negative electrode of an external load. The two outputting busbars 21 may be respectively positioned at two ends of the carrying tray 1 along the length direction of the carrying tray 1.

Each busbar 2 may be integrally formed by bending a conductive material. Except the two outputting busbars 21 of the plurality of busbars 2, each of the other busbars 2 includes a bulging portion 221 and two electrode connecting portions 222. The two electrode connecting portion 222 are respectively positioned at two opposite sides of the bulging portion 221, and are used to electrically connect with electrodes 210 of the corresponding batteries 200.

Continuously referring to FIG. 5, the carrying tray 1 includes a side wall 131 and a plurality of partitioning walls 132. The side wall 131 encircles to form a rectangle.

One end of each of the plurality of partitioning walls 132 is connected to an inner side of a long side of the side wall 131, the other end of each of the plurality of partitioning wall 132 extends toward an interior of the carrying tray 1 along the width direction of the carrying tray 1, so that the plurality of receiving grooves 13 are partitioned. In an embodiment, each partitioning wall 132 may be perpendicular to the long side of the side wall 131, but the present disclosure is not limited thereto, for example, the partitioning wall 132 and the long side of the side wall 131 also may be provided by an angle therebetween.

The carrying tray 1 further includes a plurality of supporting portions 133, each receiving groove 13 is provided with one of the plurality of supporting portions 133 therein. The supporting portion 133 may be an elongated structure, and may be provided parallel to the corresponding partitioning walls 132, so as to partition one receiving groove 13 into two sub-recessed groove13a. That is to say, along the length direction of the carrying tray 1, the plurality of supporting portions 133 and the plurality of partitioning wall 132 are alternately provided.

An inner wall 136 of each sub-recessed groove13a positioned to the supporting portion 133 is further provided with a bearing portion 134, the bearing portion 134 is used to bear the busbar 2. When the busbar 2 is mounted in the receiving groove 13, the supporting portion 133 enters into the bulging portion 221 of the busbar 2, so as to support the busbar 2. The two electrode connecting portions 222 of the busbar 2 are respectively received in the two sub-recessed grooves 13a, and are respectively borne by the bearing portions 134.

The carrying tray 1 further includes a plurality of pressing members 135, each sub-recessed groove13a may be provided one or more pressing members 135. When the busbar 2 is mounted in the receiving groove 13, the pressing member 135 can press against a side of the electrode connecting portion 222 away from the bearing portion 134, which prevents the busbar 2 from being detached from the receiving groove 13. In an embodiment, the pressing member 135 may be an elastic latching member, but the present disclosure is not limited thereto.

It is noted that, under cooperating action of the bearing portions 134, the supporting portion 133 and the pressing members 135, the busbar 2 is limited in the receiving groove 13, however, the busbar 2 is not absolutely fixed relative to the carrying tray 1, but the busbar 2 may have slight movement relative to the carrying tray 1, so as to accommodate subsequent ultrasonic welding process.

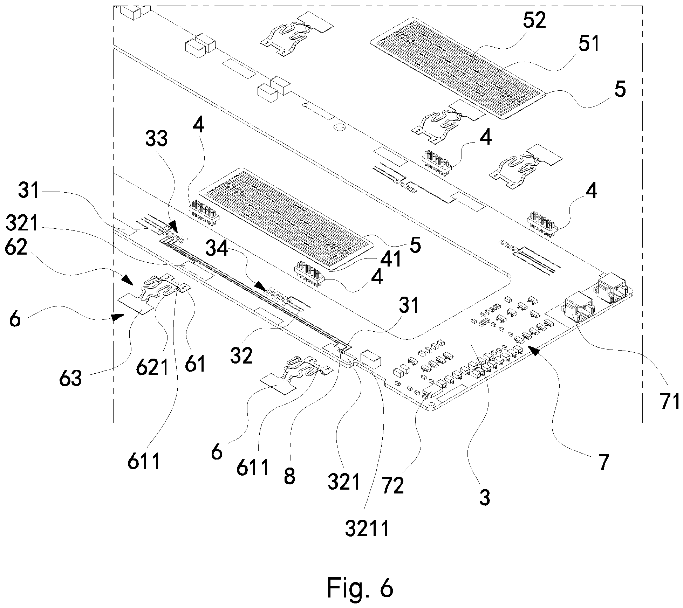

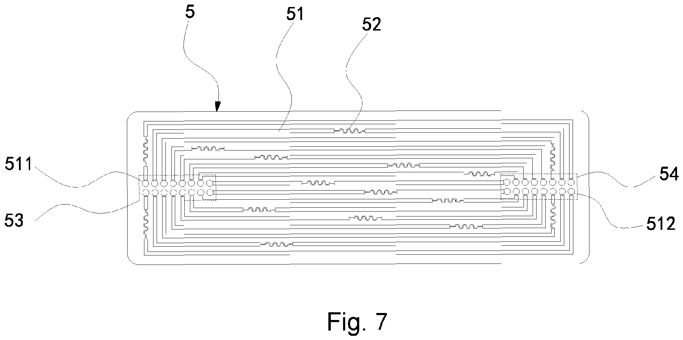

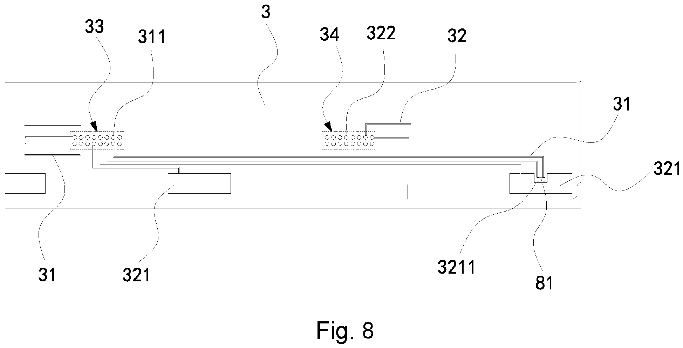

As shown in FIG. 6 to FIG. 8, FIG. 6 illustrates another exploded schematic view of the battery connection module 100 of the embodiment of the present disclosure, with the carrying tray 1 and the plurality of busbars 2 omitted, FIG. 7 illustrates a top view of the bridging circuit board 5 of the embodiment of the present disclosure, and FIG. 8 illustrates a top view of a first connect point connection region 33 and a second connect point connection region 34 of the main circuit board 3of the embodiment of the present disclosure.

Connect points of one ends of the plurality of first wirings 31 of the main circuit board 3 are converged to a first connect point connection region 33, the other ends of at least some of the plurality of first wirings 31 connect the plurality of busbars 2, the other ends of another some first wirings 31 are used to connect sensors 8. One ends of the plurality of second wirings 32 of the main circuit board 3 connect operating components 7 mounted on the main circuit board 3 and connect points of the other ends of the plurality of second wirings 32 of the main circuit board 3 are converged to a second connect point connection region 34. The operating components 7 mounted on the main circuit board 3 may include electrical connectors 71, electronic components 72 and the like.

It may be understood that, the sensors 8 may be temperature sensors 81 (for example NTC (Negative Temperature Coefficient thermistor)). For example, the temperature sensors 81 may be mechanically and electrically connected with the another some first wirings 31 of the main circuit board 3 be welding. Each temperature sensor 8 connects two first wirings 31.

In the present embodiment, the main circuit board 3 and each busbar 2 are connected via a conductive piece 6 therebetween. The other end of the first wiring 31 of the main circuit board 3 used to connect the conductive piece 6 may be constructed as an enlarged conductive pad 321, the conductive piece 6 is welded on the conductive pad 321.

The bridging circuit board 5 includes a plurality of bridging wirings 51 which are used to respectively bridge the plurality of first wirings 31 of the first connect point connection region 33 and the plurality of second wirings 32 of the second connect point connection region 34. Each bridging wiring 51 includes a fuse segment 52 thereon.

It may be understood that, the fuse melts a fusible body by a heat generated by the fuse itself when a current exceeds a prescribed value for a certain time so as to realize a function of interrupting the circuit when the current is in overcurrent and function overcurrent protection.

In the present embodiment, the bridging circuit board 5 acts as a bridge which connects the plurality of first wirings 31 and the plurality of second wiring 32 of the main circuit board 3 therebetween, the plurality of first wirings 31 and the plurality of second wirings 32 can be separately provided, and have different functions and actions, for example, the plurality of first wirings 31 may be used to connect the plurality of busbars 2 and the temperature sensors 81, the plurality of second wirings 32 may be used to connect the operating components 7 (includes the electronic components 72, the electrical connector 71 and the like). At the same time, the fuse segments 52 are provided on the bridging circuit board 5, so when a circuit is overcurrent, after a fuse wiring on the bridging circuit board 5 is melted and interrupted, it only needs to simply replace the bridging circuit board 5, but it does not need to draw out and replace the main circuit board 3, which has advantages that repair is simple and cost is low.

It may be understood that, the fuse segment 52 is constructed as a fusible wiring which is provided on the bridging wiring 51. The fusible wiring is connected with an operating wiring of the battery connection module 100 of the embodiment of the present disclosure, may be melted and interrupted when the circuit is in overcurrent so as to function overcurrent protection.

In an embodiment, the bridging circuit board 5 is constructed as a flexible circuit board (Flexible Printed Circuit, FPC), the main circuit board 3 is constructed a rigid circuit board. It may be understood that, the flexible circuit board is a soft and bendable printed circuit board, according to layer number of the conductive cooper foil, the flexible printed circuit board may be classified into a single layer board, a double surface board, a double layer board, a multiple layer board and the like, the embodiment of the present disclosure does not make special limitation thereto, but the single layer flexible circuit board has advantage of lower cost. To select the flexible circuit board is more convenient to assemble or disassemble the bridging circuit board 5 and the main circuit board 3. That the main circuit board 3 is constructed as a rigid circuit board may lower cost.

As shown in FIG. 6, the battery connection module 100 further includes connectors 4. Two ends of each bridging wiring 51 of the bridging circuit board 5 are connected respectively with the first wiring 31 and the second wiring 32 of the main circuit board 3 via conductive terminals 41 of the connectors 4.

In an embodiment, a connecting manner of two ends of the conductive terminal 41 of the connector 4 with the main circuit board 3 and the bridging circuit board 5 therebetween is through-hole type welding.

Specifically, a connect point of one end of the first wiring 31 may be constructed as a first conductive hole 311, the first conductive hole 311 penetrates an upper surface and a lower surface of the main circuit board 3. In an embodiment, the upper surface and the lower surface around the first conductive hole 311 each may has a conductive ring which is circular. In an embodiment, an inner wall of the first conductive hole 311 may be provided with a conductive layer. A plurality of first conductive holes 311 of the plurality of first wirings 31 are converged in the first connect point connection region 33.

A connect point of one end of the second wiring 32 may be constructed as a second conductive hole 322, a construction of the second conductive hole 322 is the same as that of the first conductive hole 311. A plurality of second conductive holes 322 of the plurality of second wirings 32 are converged in the second connect point connection region 34.

Two ends of each bridging wiring 51 of the bridging circuit board 5 may be respectively constructed as a third conductive hole 511 and a fourth conductive hole 512, the third conductive hole 511 and the fourth conductive hole 512 may be constructed similar to the first conductive hole 311. The plurality of third conductive holes 511 of one ends of the plurality of bridging wirings 51 are converged in the third connect point connection region 53, the plurality of fourth conductive hole 512 of other ends of the plurality of bridging wirings 51 are converged in the fourth connect point connection region 54.

The third connect point connection region 53 of the bridging circuit board 5 and the first connect point connection region 33 of the main circuit board 3 are correspondingly provided, and the plurality of third conductive holes 511 and the plurality of first conductive holes 311 are provided as one-to-one correspondence. The fourth connect point connection region 54 of the bridging circuit board 5 and the second connect point connection region 34 of the main circuit board 3 are correspondingly provided, and the plurality of fourth conductive holes 512 and the plurality of second conductive holes 322 are provided as one-to-one correspondence.

In the present embodiment, the plurality of first wirings 31 of the main circuit board 3 are connected with one ends of the plurality of bridging wirings 51 of the bridging circuit board 5 via one connector 4, the plurality of second wiring 32 of the main circuit board 3 are connected with the other ends of the plurality of bridging wirings 51 of the bridging circuit board 5 via the other connector 4. The connector 4 includes a plurality of conductive terminals 41.

Two ends of the conductive terminal 41 of one connector 4 are respectively inserted into the corresponding first conductive hole 311 and the corresponding third conductive hole 511, and realize connections with the first wiring 31 and one end of the bridging wiring 51 by welding. Two ends of the conductive terminal 41 of the other connector 4 are respectively inserted into the corresponding second conductive hole 322 and the corresponding fourth conductive hole 512, and realize connections with the second wiring 32 and the other end of the bridging wiring 51 by welding.

In another embodiment, connections between the two ends of the conductive terminal 41 of the connector 4 and the main circuit board 3 and the bridging circuit board 5 may employ Surface Mounted Technology (SMT), or for example may employ a flexible circuit board connector, or may employ other connection manner. The conductive piece 6 includes a circuit board connecting segment 61, a busbar connecting segment 63 and a buffering segment 62 which is positioned between the circuit board connecting segment 61 and the busbar connecting segment 63. The circuit board connecting segment 61 is used to electrically connect with one end of the first wiring 31 of the main circuit board 3, for example, the circuit board connecting segment 61 is welded with the conductive pad 321 of the first wiring 31, the circuit board connecting segment 61 has a first notch 611, the conductive pad 321 corresponding to the temperature sensor 81 has a second notch 3211, the first notch 611 and the second notch 3211 are correspondingly provided. The second notch 3211 of the conductive pad 321 is used to receive the temperature sensor 81. The busbar connecting segment 63 is used to connect the busbar 2. The buffering segment 62 has two buffering bars 621, the buffering segment 62 is smaller in rigidity and has elasticity, when relative movement generated between the main circuit board 3 and the busbar 2, the buffering segment 62 can compensate the relative movement, which avoids damage the entire conductive piece 6.

In conclusion, advantages and beneficial effects of the battery connection module 100 of the embodiment of the present disclosure at least include: in the battery connection module 100 of the embodiment, the bridging circuit board 5 acts as a bridge which connects the plurality of first wirings 31 and the plurality of second wirings 32 of the main circuit board 3 therebetween, the plurality of first wirings 31 and the plurality of second wirings 32 can be separately provided, and have different functions and actions, for example, the plurality of first wirings 31 may be used to connect the plurality of busbars 2 and the temperature sensors 81, the plurality of second wirings 32 may be used to connect the operating components 7 (includes the electronic components 72, the electrical connector 71 and the like). At the same time, the fuse segments 52 are provided on the bridging circuit board 5, so when a circuit is overcurrent, after a fuse wiring on the bridging circuit board 5 is melted and interrupted, it only needs to simply replace the bridging circuit board 5, but it does not need to draw out and replace the main circuit board 3, which has advantages that repair is simple and cost is low.

It may be understood that the embodiments/implementing manners provided by the present disclosure may be combined with each other without contradiction, which will not be described in detail herein.

In the embodiments of the present disclosure, the terms "first", "second" and "third" are only used for the purpose of description and cannot be understood as indicating or implying relative importance; the term "plurality of' refers to two or more, unless otherwise expressly defined. The terms "mount, "connect with", "connect", "fix" and other likes should be understood in a broad sense. For example, "connect" maybe fixedly connect, detachably connect, or integrally connect; "connect with" may be directly connect with or indirectly connect with via an intermediate media. For ordinary technicians in the art, the specific meaning of the above terms in the embodiments of the present disclosure may be understood according to specific situations.

In the description of the embodiments of the present disclosure, it should be understood that the terms "up", "down", "left", "right", "front", "rear" and the like indicating the orientation or position relationship are based on the orientation or position relationship shown in the figure, are only for the convenience of describing the embodiments of the present disclosure and simplifying the description, rather than for indicating or implying that the device or unit referred to must have a specific direction, be constructed and operated in a specific orientation. Therefore, these terms cannot be understood as a limitation on the embodiments of the present disclosure.

In the description of this specification, the description of the terms "one embodiment", "some embodiments", "specific embodiments" and the like means that the specific features, structures, materials or characteristics described in combination with this embodiment or example are included in at least one embodiment or example of the embodiments of the present disclosure. In this specification, the schematic expressions of the above terms do not necessarily refer to the same embodiments or examples. Moreover, the specific features, structures, materials or characteristics described may be combined in an appropriate manner in any one or more embodiments or examples.

The above is only the preferred embodiment of the embodiments of the present disclosure, and is not used to limit the embodiments of the present disclosure. For those skilled in the art, the embodiments of the present disclosure can have various modifications and changes.

## Claims

1. A battery connection module (100) used to connect a plurality of batteries (200), the battery connection module (100) comprising:
a carrying tray (1);
a plurality of busbars (2) assembled on the carrying tray (1), the plurality of busbars (2) being used to connect the plurality of batteries (200);
a main circuit board (3) comprising a plurality of first wirings (31) and a plurality of second wirings (32), connect points of one ends of the plurality of first wirings (31) being converged to a first connect point connection region (33), the other ends of at least some of the plurality of first wirings (31) connecting the plurality of busbars (2), one ends of the plurality of second wirings (32) connecting operating components (7) mounted on the main circuit board (3) and connect points of other ends of the plurality of second wirings (32) being converged in a second connect point connection region (34); and
a bridging circuit board (5) comprising a plurality of bridging wirings (51) which are used to respectively bridge the plurality of first wirings (31) of the first connect point connection region (33) and the plurality of second wirings (32) of the second connect point connection region (34), each bridging wiring (51) comprising a fuse segment (52) thereon,
wherein the battery connection module (100) further comprises connectors (4); two ends of each bridging wiring (51) are connected respectively with the first wiring (31) and the second wiring (32) of the main circuit board (3) via terminals (41) of the connectors (4).

2. The battery connection module according to claim 1, wherein the fuse segment (52) is constructed as a fusible wiring which is provided on the bridging wiring (51).

3. The battery connection module according to any one of the preceding claims, wherein the bridging circuit board (5) is constructed as a flexible circuit board, the main circuit board (3) is constructed as a rigid circuit board.

4. The battery connection module according to any one of the preceding claims, wherein a connecting manner of two ends of the terminal (41) of the connector (4) with the main circuit board (3) and the bridging circuit board (5) therebetween is through-hole type welding.

5. The battery connection module according to any one of the preceding claims, wherein the other ends of another some first wirings (31) of the main circuit board (3) are further used to connect sensors (81).

6. The battery connection module according to any one of the preceding claims, wherein the main circuit board (3) and each busbar (2) are connected via a conductive piece (6) therebetween.

7. The battery connection module according to claim 6, wherein the conductive piece (6) comprises a circuit board connecting segment (61), a busbar connecting segment (63) and a buffering segment (62) which is positioned between the circuit board connecting segment (61) and the busbar connecting segment (63).

## Patentansprüche

1. Batterieverbindungsmodul (100), das verwendet wird, um eine Vielzahl von Batterien (200) zu verbinden, wobei das Batterieverbindungsmodul (100) umfasst:
eine Trageschale (1);
eine Vielzahl von Sammelschienen (2), die auf der Trageschale (1) montiert sind, wobei die Vielzahl von Sammelschienen (2) verwendet werden, um die Vielzahl von Batterien (200) zu verbinden;
eine Hauptleiterplatte (3), die eine Vielzahl von ersten Verdrahtungen (31) und eine Vielzahl von zweiten Verdrahtungen (32) umfasst, wobei Verbindungspunkte von einen Enden der Vielzahl von ersten Verdrahtungen (31) zu einem ersten Verbindungspunkt-Verbindungsbereich (33) zusammengeführt werden, wobei die anderen Enden von mindestens einigen der Vielzahl von ersten Verdrahtungen (31) die Vielzahl von Sammelschienen (2) verbinden, wobei eine Enden der Vielzahl von zweiten Verdrahtungen (32) Betriebskomponenten (7) verbinden, die auf der Hauptleiterplatte (3) angebracht sind, und wobei Verbindungspunkte von anderen Enden der Vielzahl von zweiten Verdrahtungen (32) in einem zweiten Verbindungspunkt-Verbindungsbereich (34) zusammengeführt werden; und
eine Überbrückungsleiterplatte (5), die eine Vielzahl von Überbrückungsverdrahtungen (51) umfasst, die verwendet werden, um jeweils die Vielzahl von ersten Verdrahtungen (31) des ersten Verbindungspunkt-Verbindungsbereichs (33) und die Vielzahl von zweiten Verdrahtungen (32) des zweiten Verbindungspunkt-Verbindungsbereichs (34) zu überbrücken, wobei jede Überbrückungsverdrahtung (51) ein Sicherungssegment (52) an sich umfasst,
wobei das Batterieverbindungsmodul (100) weiter Verbinder (4) umfasst; zwei Enden jeder Überbrückungsverdrahtung (51) über Anschlüsse (41) der Verbinder (4) mit der ersten Verdrahtung (31) bzw. der zweiten Verdrahtung (32) der Hauptleiterplatte (3) verbunden sind.

2. Batterieverbindungsmodul nach Anspruch 1, wobei das Sicherungssegment (52) als schmelzbare Verdrahtung ausgebildet ist, die an der Überbrückungsverdrahtung (51) bereitgestellt ist.

3. Batterieverbindungsmodul nach einem der vorstehenden Ansprüche, wobei die Überbrückungsleiterplatte (5) als flexible Leiterplatte ausgebildet ist, die Hauptleiterplatte (3) als starre Leiterplatte ausgebildet ist.

4. Batterieverbindungsmodul nach einem der vorstehenden Ansprüche, wobei eine Verbindungsart von zwei Enden des Anschlusses (41) des Verbinders (4) mit der Hauptleiterplatte (3) und der Überbrückungsleiterplatte (5) dazwischen eine Schweißung vom Typ einer Durchkontaktierung ist.

5. Batterieverbindungsmodul nach einem der vorstehenden Ansprüche, wobei die anderen Enden einiger anderer erster Verdrahtungen (31) der Hauptleiterplatte (3) weiter verwendet werden, um Sensoren (81) zu verbinden.

6. Batterieverbindungsmodul nach einem der vorstehenden Ansprüche, wobei die Hauptleiterplatte (3) und jede Sammelschiene (2) über ein leitfähiges Stück (6) dazwischen verbunden sind.

7. Batterieverbindungsmodul nach Anspruch 6, wobei das leitfähige Stück (6) ein Leiterplattenverbindungssegment (61), ein Sammelschienenverbindungssegment (63) und ein Puffersegment (62) umfasst, das zwischen dem Leiterplattenverbindungssegment (61) und dem Sammelschienenverbindungssegment (63) positioniert ist.

## Revendications

1. Module de connexion de batterie (100) utilisé pour connecter une pluralité de batteries (200), le module de connexion de batterie (100) comprenant :
un plateau de transport (1) ;
une pluralité de barres omnibus (2) assemblées sur le plateau de transport (1), la pluralité de barres omnibus (2) étant utilisée pour connecter la pluralité de batteries (200) ;
une carte de circuit principal (3) comprenant une pluralité de premiers câblages (31) et une pluralité de seconds câblages (32), des points de connexion d'une extrémité de la pluralité de premiers câblages (31) étant convergés vers une première région de connexion de point de connexion (33), les autres extrémités d'au moins quelques uns de la pluralité de premiers câblages (31) connectant la pluralité de barres omnibus (2), une extrémité de la pluralité de seconds câblages (32) connectant des composants opérationnels (7) montés sur la carte de circuit principal (3) et des points de connexion d'autres extrémités de la pluralité de seconds câblages (32) étant convergés dans une seconde région de connexion de point de connexion (34) ; et
une carte de circuit de pontage (5) comprenant une pluralité de câblages de pontage (51) qui sont utilisés pour ponter respectivement la pluralité de premiers câblages (31) de la première région de connexion de point de connexion (33) et la pluralité de seconds câblages (32) de la seconde région de connexion de point de connexion (34), chaque câblage de pontage (51) comprenant un segment de fusible (52) sur celui-ci,
dans lequel le module de connexion de batterie (100) comprend en outre des connecteurs (4) ; deux extrémités de chaque câblage de pontage (51) sont connectées respectivement au premier câblage (31) et au second câblage (32) de la carte de circuit principal (3) par l'intermédiaire de bornes (41) des connecteurs (4).

2. Module de connexion de batterie selon la revendication 1, dans lequel le segment de fusible (52) est construit en tant que câblage de fusible qui est fourni sur le câblage de pontage (51).

3. Module de connexion de batterie selon l'une quelconque des revendications précédentes, dans lequel la carte de circuit de pontage (5) est construite en tant que carte de circuit flexible, la carte de circuit principal (3) est construite en tant que carte de circuit rigide.

4. Module de connexion de batterie selon l'une quelconque des revendications précédentes, dans lequel un mode de connexion de deux extrémités de la borne (41) du connecteur (4) avec la carte de circuit principal (3) et la carte de circuit de pontage (5) entre elles est un soudage de type traversant.

5. Module de connexion de batterie selon l'une quelconque des revendications précédentes, dans lequel les autres extrémités d'autres quelconques premiers câblages (31) de la carte de circuit principal (3) sont en outre utilisées pour connecter des capteurs (81).

6. Module de connexion de batterie selon l'une quelconque des revendications précédentes, dans lequel la carte de circuit principal (3) et chaque barre omnibus (2) sont connectées par l'intermédiaire d'une pièce conductrice (6) entre elles.

7. Module de connexion de batterie selon la revendication 6, dans lequel la pièce conductrice (6) comprend un segment de connexion de carte de circuit (61), un segment de connexion de barre omnibus (63) et un segment tampon (62) qui est positionné entre le segment de connexion de carte de circuit (61) et le segment de connexion de barre omnibus (63).
